# EUROPEAN PATENT SPECIFICATION

(11) **EP 4 218 246 B1**
(45) Date of publication and mention of the grant of the patent: **20.08.2025**
(21) Application number: 21708432.6
(22) Date of filing: 29.01.2021
(51) Int. Cl.: H04N 21/234, H04N 21/44

(54) **DETECTION OF IMAGE SPACE SUITABLE FOR OVERLAYING MEDIA CONTENT**
ERKENNUNG EINES FÜR DIE ÜBERLAGERUNG VON MEDIENINHALTEN GEEIGNETEN BILDRAUMS
DÉTECTION D'UN ESPACE D'IMAGE CONVENANT À LA SUPERPOSITION D'UN CONTENU MULTIMÉDIA

(30) Priority: 09.12.2020 US 202017116944
(43) Date of publication of application: 02.08.2023
(73) Proprietor: SALESFORCE, INC., San Francisco CA 94105 (US)
(72) Inventor: LUNDIN, Jessica, San Francisco, CA 94105 (US); SOLLAMI, Michael Reynolds, San Francisco, CA 94105 (US); ROSS, Alan Martin, San Francisco, CA 94105 (US); LONSDORF, Brian J., San Francisco, CA 94105 (US); WOODWARD, David James, San Francisco, CA 94105 (US); SCHOPPE, Owen Winne, San Francisco, CA 94105 (US); ROHDE, Sönke, San Francisco, CA 94105 (US)
(74) Representative: Goddar, Heinz J.
(86) International application number: PCT/US2021/015739
(87) International publication number: WO 2022/125127

(56) References cited:
- US-A1- 2006 026 628
- US-A1- 2017 278 289
- US-A1- 2018 013 977
- US-A1- 2019 222 776

## Description

### TECHNICAL FIELD

The disclosure generally relates to the field of detecting space within an image or a video frame where content can be inserted and more specifically to neural network-based detection and heuristics-based detection of space that is suitable for overlaying media content.

### BACKGROUND

Many images and video frames include areas where text and other content may be inserted without obscuring important part or parts of the image or the video frame. Those areas are sometimes referred to as copy space. For example, an image or a video frame may focus on a ship and the people on that ship. However, that image or video frame may include areas where all is shown is a sky and/or ocean. Those areas may be used for displaying text or other media content (e.g., images). In one example, those areas may be used to display additional content items to a viewer. In another example, copy space may be used to insert links and other information into an image or a video frame.

Various systems are available today that enable a curator to mark copy space on an image. That process is usually time consuming and inefficient when hundreds of thousands of images of video frames must be marked. Therefore, it is desirable to automatically and accurately identify copy space on images and video frames.

US 2017/278289 A1 discloses: Some embodiments of the present disclosure provide a content integration system. The content integration system is configured to retrieve a source digital content, retrieve a target digital content, identify a region within the target digital content for placing or integrating the source digital content, and place or integrate the target digital content onto the identified region of the source digital content. The content integration system can be configured to place the source digital content into the target digital content in an aesthetically-pleasing, unobtrusive, engaging, and/or otherwise favorable manner. The content integration system can be particularly useful for advertisements, enhanced expression, entertainment, information, or communication.

US 2018/013977 A1 discloses: One embodiment provides a method comprising identifying a product placement opportunity for a product in a frame of a piece of content during playback of the piece of content on a display device. The method further comprises determining a location in the frame to insert product placement content for the product based on a learned statistical model representing learned placement patterns related to the product. The method further comprises modifying the product placement content based on one or more objects present in the frame, and inserting a product placement for the product in the piece of content by inserting the modified product placement content in the frame based on the location. The modified product placement content appears to occur naturally in the piece of content.

US 2006/026628 A1 discloses: A method and apparatus inserts virtual advertisements or other virtual contents into a sequence of frames of a video presentation by performing real-time content-based video frame processing to identify suitable locations in the video for implantation. Such locations correspond to both the temporal segments within the video presentation and the regions within an image frame that are commonly considered to be of lesser relevance to the viewers of the video presentation. This disclosure presents a method and apparatus that allows a non-intrusive means to incorporate additional virtual content into a video presentation, facilitating an additional channel of communications to enhance greater video interactivity.

US 2019/222776 A1 discloses systems and methods for identifying one or more portions of images or video frames that are appropriate for augmented overlay of advertisement or other visual content, and augmenting the image or video data to include such additional visual content. Identifying the portions appropriate for overlay or augmentation may include employing one or more machine learning models configured to identify objects or regions of an image or video frame that meet criteria for visual augmentation. The pose of the augmented content presented within the image or video frame may correspond to the pose of one or more real-world objects in the real world scene captured within the original image or video.

### BRIEF DESCRIPTION OF DRAWINGS

The disclosed embodiments have other advantages and features which will be more readily apparent from the detailed description, the appended claims, and the accompanying figures (or drawings). A brief introduction of the figures is below.
Figure (FIG.) 1 illustrates a neural networks-based system for detecting space suitable for overlaying media content onto an image, in accordance with some embodiments.
FIG. 2 illustrates images with exemplary bounding boxes.
FIG. 3 illustrates an example of a data structure with corresponding fields that represents an output of the neural network.
FIG. 4 illustrates various media content items being overlaid over a candidate image.
FIG. 5 is a flowchart illustrating the overall process for selecting space suitable for overlaying media content onto an image, in accordance with some embodiments
FIG. 6 illustrates a candidate image with an exemplary identified space for overlaying media content items, in accordance with some embodiments.
FIG. 7A-7D illustrate results of various image processing techniques on a candidate image, in accordance with some embodiments.
FIG. 8A-8E illustrate results of various image processing techniques on a candidate image, in accordance with some embodiments.
FIG. 9A-9C illustrate images with exemplary detected spaces for overlaying media content item, in accordance with some embodiments.
FIG. 10 is a block diagram of a heuristics-based media content insertion system, in accordance with some embodiments.
FIG. 11 is a flow chart illustrating the overall process for detecting space suitable for overlaying media content onto an image, in accordance with some embodiments.
FIG. 12 is a block diagram illustrating components of an example machine able to read instructions from a machine-readable medium and execute them in a processor (or controller) for use by the modules of the systems depicted in FIG. 1 and FIG 10.

The figures depict various embodiments for purposes of illustration only. One skilled in the art will readily recognize from the following discussion that alternative embodiments of the structures and methods illustrated herein may be employed without departing from the principles of the embodiments described herein.

The figures use like reference numerals to identify like elements. A letter after a reference numeral, such as "115a," indicates that the text refers specifically to the element having that particular reference numeral. A reference numeral in the text without a following letter, such as "115," refers to any or all of the elements in the figures bearing that reference numeral.

### DETAILED DESCRIPTION

The placement of text over an image is an important part of producing high-quality
visual designs. Application areas for copy space detection include generation of email banners, homepages, and call-to-actions, etc. These are mostly performed manually, and therefore making the task of graphic asset development time-consuming, requiring designers to curate
and manipulate media and vector graphics, build up layer stacks, and finally place and format text, all while balancing style, brand consistency and tone in the design. Automating this work by selecting appropriate position and orientation, and style for textual elements requires understanding the contents of the image over which the text must be placed. Furthermore, establishing parameters of copy spaces where media content such as text may be rendered over images is distinct from foreground-background separation approaches in image processing because the resulting separation maps may not account for portions of the image that may be potentially overlaid with media content without disrupting significant visual elements in the image.

Disclosed herein are methodologies for detecting space suitable for overlaying media content onto an image (copy space). One methodology presented is a neural networks-based system, method and computer readable storage medium for detecting space suitable for overlaying media content onto an image (copy space). Another methodology presented is a heuristics-based system, method and computer readable storage medium for detecting space suitable for overlaying media content onto an image (copy space).

### NEURAL NETWORKS BASED SYSTEM FOR COPY-SPACE DETECTION

### CONFIGURATION OVERVIEW

Disclosed herein are a neural networks-based system, method and computer readable storage medium for detecting space suitable for overlaying media content onto an image (copy space). The system receives a candidate image which may be an image or a video frame. Generally, an image or a video frame may have some space for inserting media content without covering vital portions of the image. The candidate image is then input into a neural network that has been trained with training data including a multitude of images and, for each image of the plurality of images, one or more corresponding bounding boxes. The neural network may output coordinates and one or more dimensions representing one or more bounding boxes for inserting media content into the candidate image. The one or more bounding boxes may be transmitted with a request for a media content item to be displayed in a bounding box. The request may include the one or more dimensions of the one or more bounding boxes. In response to the request, the media content item may be received, and the candidate image and the media content item overlaid on top of the candidate image within the bounding box may be displayed.

### MEDIA CONTENT INSERTION PROCESS

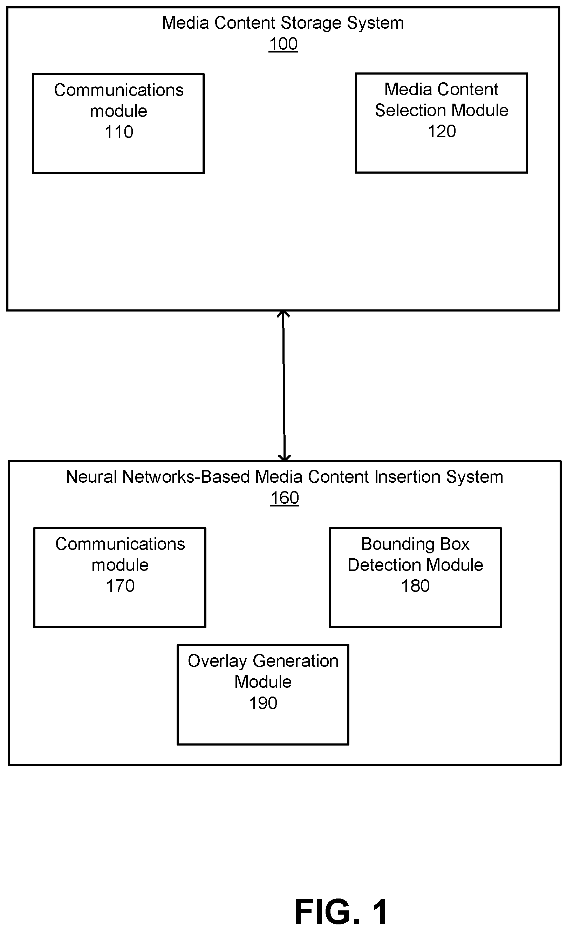

FIG. 1 illustrates an exemplary system for detecting space suitable for overlaying media content onto an image. The system may include a media content storage system 100 and a media content insertion system 160. Media content insertion system 160 includes a communications module 170, bounding box detection module 180, and overlay generation module 190.

Communications module 170 may include hardware, software, or a combination of the two to communicate and may be used by media content insertion system 160 to communicate with other systems (e.g., media content storage system) and devices. Communications module 170 may receive a candidate image for overlaying media content. Communications module 170 may receive the candidate image from another device or a location within the media content insertion system. The candidate image may be any appropriately formatted image. In some embodiments, the candidate image may be a frame of a video content item. Communications module 170 may pass the candidate image to bounding box detection module 180.

Bounding box detection module 180 may receive the candidate image from communications module 170 and process the candidate image. Bounding box detection module 180 may input the candidate image into a neural network to receive as output one or more bounding boxes. The input operation occurs after the neural network has been trained with training data. The training data in this instance includes images and, for each image one or more corresponding bounding boxes. In some embodiments, the neural network may be a convolution neural network. The network may use as input image pixels transformed into vectors. In some embodiments, the neural network may be a multi-layer perceptron that includes an input layer, a hidden layer and an output layer. This type of network may include other layers.

As referred to herein, a bounding box refers to an area on an image for placing media content. Although a bounding box is illustrated as a rectangle, the bounding box may be any shape, including but not limited to, a square, a circle, a pentagon, and any other suitable shape. The bounding box may be of an irregular dimension and/or include multiple shapes.

For example, a bounding box may be represented by a rectangle including one or more coordinates on the candidate image and one or more dimensions extending from the one or more coordinates. In some embodiments, a bounding box may be represented by a coordinate that is counted in terms of a number of pixels horizontally and vertically from the upper left-hand corner of the candidate image and two dimensions. That coordinate may represent the upper left-hand corner of the bounding box. The two dimensions may include a vertical offset and a horizontal offset extending from the coordinate. Based on the coordinate and the offsets, a rectangular bounding box having an area based on the offsets and the location based on the coordinate may be generated.

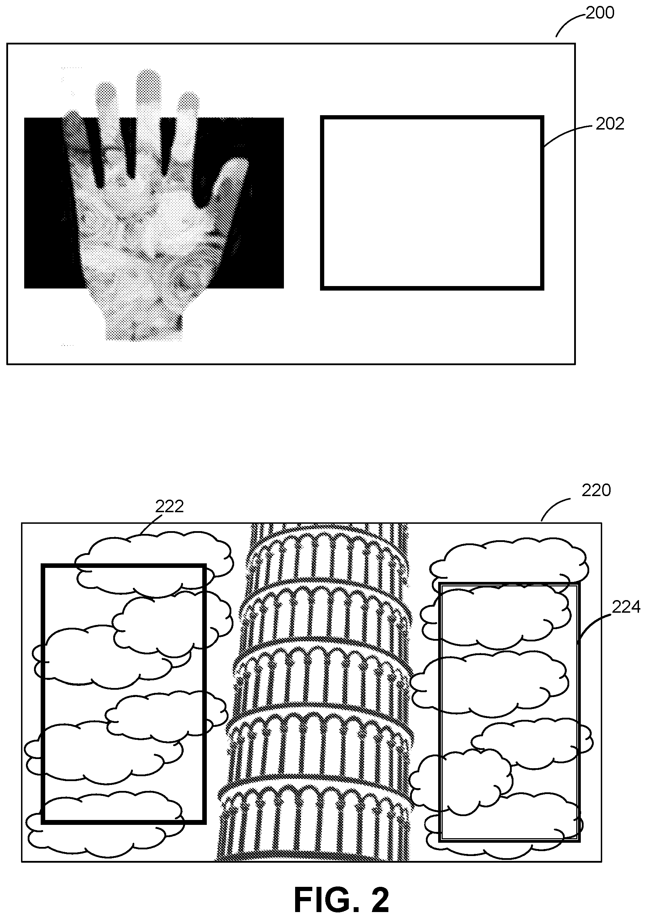

FIG. 2 illustrates images with exemplary corresponding bounding boxes. Image 200 illustrates bounding box 202. However, different size/shape bounding boxes may be added to image 200. Image 220 is illustrated with two corresponding bounding boxes (bounding box 222 and bounding box 224). Although bounding box 222 and bounding box 224 are illustrated as rectangular those bounding boxes may be of different shapes and sizes.

In some embodiments, media content insertion system 160 may receive, from the neural network, a first coordinate representing a first offset along a horizontal axis of the candidate image and a second coordinate representing a second offset along a vertical axis of the candidate image. The two coordinates may represent a particular pixel on the candidate image. The pixel may serve as a point associated with the bounding box. For example, as discussed above, the point may be a center of a circle, a corner of a rectangle, a triangle, a square, or another suitable point. Media content insertion system 160 may receive a first dimension extending from the first coordinate along the horizontal axis. For example, the first dimension may be a number of units (e.g., pixels) that media content insertion system 160 may use to calculate the next point (e.g., in a horizontal direction) associated with the bounding box. In some embodiments, the first dimension may correspond to a diameter of a circle, a radius of a circle, a side of a rectangle, a side of a square or a side of a triangle.

In some embodiments, media content insertion system 160 may receive a second dimension extending from the second coordinate along the vertical axis. The second dimension may be a number of units (e.g., pixels) that media content insertion system 160 may use to calculate the next point (e.g., in a vertical direction) associated with the bounding box. In some embodiments, the second dimension may correspond to radii or diameters of an oval, a second side of a rectangle, or a triangle. In some embodiments, the received bounding box may only have one dimension and the second dimension may not be shown.

In some embodiments, media content insertion system 160 may receive a probability that a corresponding bounding box is located on the candidate image in an area suitable for inserting the media content into the candidate image. For example, the neural network may return a multitude of possible bounding boxes each having a probability of the bounding box being a valid bounding box for inserting media content into the candidate image. Bounding box detection module 180 may determine for each bounding box whether a corresponding probability meets a threshold probability. For example, the threshold probability may be a percentage value, a value between zero and one or another suitable value. The threshold probability may be set to, for example, .5, .8..9 or to another suitable value. Bounding box detection module 180 may, for example, retrieve the threshold probability from memory. In response to determining that a probability for a particular bounding box does not meet the threshold probability, bounding box detection module 180 removes the particular bounding box from the request. That is, the bounding boxes received from the neural network may be filtered based on probability.

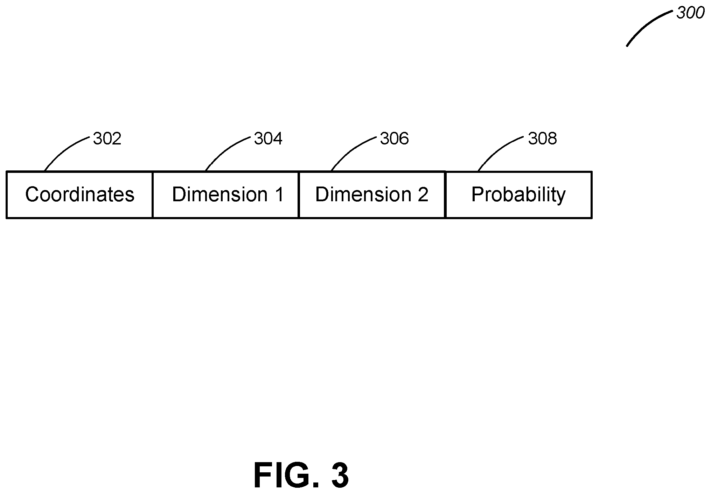

FIG. 3 illustrates an example of a data structure with corresponding fields that represents an output of the neural network representing a bounding box. Data structure 300 of FIG. 3 may include one or more fields. Field 302 may include one or more coordinates associated with the bounding box. For example, field 302 may include a coordinate of a corner of a rectangular bounding box, a center of a circular bounding box or another suitable point associated with the bounding box. In some embodiments field 302 may include a vector of points representing a bounding box. Field 304 may include a first dimension stored as a number of units (e.g., pixels) to offset from a point represented by the coordinates in field 302. Field 306 may include a second dimension stored as a number of units (e.g., pixels) to offset from a point represented by the coordinates in field 302. There may be other dimension stored in data structure 300. Field 308 stores a probability that the bounding box represented by the particular data structure is a valid bounding box. In some embodiments, each field of data structure 300 may be a coordinate in a vector of coordinates representing an irregular bounding box.

As discussed above, in some embodiments, the bounding box(es) may be of different shapes. For example, a bounding box may be a square (e.g., represented by a coordinate and one offset), a circle (e.g., represented by a coordinate being the center of the circle and one dimension representing a radius or a diameter of the circle), an oval (e.g., represented by two radii and a coordinate at the center). As discussed above, a bounding box may be any shape and/or may have irregular dimensions. In some embodiments, a bounding box may be represented by a vector of points representing coordinates on the candidate image. The vectors and connections of those vectors may represent a bounding box.

In some embodiments, the neural network may be trained using images (sometimes referred to as training images) with known bounding boxes. The neural network may be trained using a training module (not shown) which may be part of media content insertion system 160 or a different system. The training module may receive a multitude of training images and corresponding vectors. Each vector may include a set of coordinates and a set of dimensions, representing a particular bounding box. In some embodiments, some training images may include more than one bounding box and, thus, may correspond to multiple vectors. The training module may input the training images and the corresponding vectors into the neural network to train the neural network.

Referring back to FIG. 1, bounding box detection module 180 may receive, from the neural network, coordinates and one or more dimensions representing one or more bounding boxes for inserting media content into the candidate image. Bounding box detection module 180 may receive a data structure as illustrated in FIG. 3. Bounding box detection module 180 passes the one or more bounding boxes to overlay generation module 190.

Overlay generation module 190 may include hardware, software, or a combination of both. Overlay generation module 190 may generate a request for a media content item to be displayed in a bounding box received from bounding box detection module 180. The request may include one or more dimensions of the one or more bounding boxes. Overlay generation module 190 may pass the request to communications module 170 that may transmit the request to media content storage system 100 (e.g., to communications module 110).

Communications module 110 may receive the request and pass the request to media content selection module 120. Communications module 110 may include hardware, software, or a combination of both. Media content selection module 120 may extract data associated with each bounding box (e.g., one or more data structures 300 of FIG. 3) and search for media content (e.g. in a database) having dimensions that match the dimensions of the one or more bounding boxes. Media content selection module 120 may retrieve (e.g. from the database) one or more media content items that match the one or more bounding box dimensions and generate a response to the request that includes one or more media content items. In some embodiments, in addition to each media content item, the response may include metadata associated with each media content item. The metadata may include the dimensions of the corresponding media content item as well as other information (e.g., name, type (image, video, etc.)), orientation, and/or other suitable information. Media content selection module 120 may pass the response to communications module 110. Communications module 110 may transmit the response to media content insertion system 160.

In some embodiments, the response may include one or more identifiers of the one or more media content items. Each identifier may be part of a data structure that also includes dimensions for each media content item. Other information may be included in the data structure (e.g., name, type (image, video, etc.)). This may be advantageous because media content items may be large in size and may take a long time to transfer in comparison to just transferring an identifier. In some embodiments, the response may include a link to each media content item so that it can be retrieved.

Media content insertion system 160 may receive, using communications module 170, the response to the request that includes one or more media content items. Communications module 170 may pass the response to overlay generation module 190. Overlay generation module 190 may include hardware, software, or a combination of both. Overlay generation module 190 may extract from the response the one or more media content items.

In some embodiments, overlay generation module 190 may receive multiple media content items and may select one of the received media content items to be displayed based on the dimensions of the content item matching the dimensions of a bounding box that has a highest probability of being a valid bounding box. For example, in response to the request, media content insertion system 160 may receive multiple media content items corresponding to multiple bounding boxes. Overlay generation module 190 may identify from the plurality of media content items, a particular media content item corresponding to a bounding box with the highest probability. Overlay generation module 190 may access the metadata of each received media content item and retrieve the dimensions for each media content item. Overlay generation module 190 may retrieve probabilities for each of the detected bounding boxes and determine which bounding box has the highest probability.

Overlay generation module 190 may retrieve dimensions of the bounding box with the highest probability and compare those dimensions to the dimensions of media content items. Overlay generation module 190 may select the media content item that best matches the dimensions. For example, some media content items may be too large, thus, overlay generation module 190 may filter those out. Overlay generation module 190 may select the media content item with the dimensions closest to those of the selected bounding box. In some embodiments, overlay generation module 190 may take into account orientation of the media content item. For example, if a particular media content item should be displayed in portrait orientation and the orientation of the bounding box would force the media content item to be sideways, based on the dimensions, overlay generation module 190 may filter (e.g., remove from consideration) that particular media content item. When overlay generation module 190 selects a media content item, overlay generation module 190 may cause a display of the candidate image and the media content item overlaid on top of the candidate image within the bounding box.

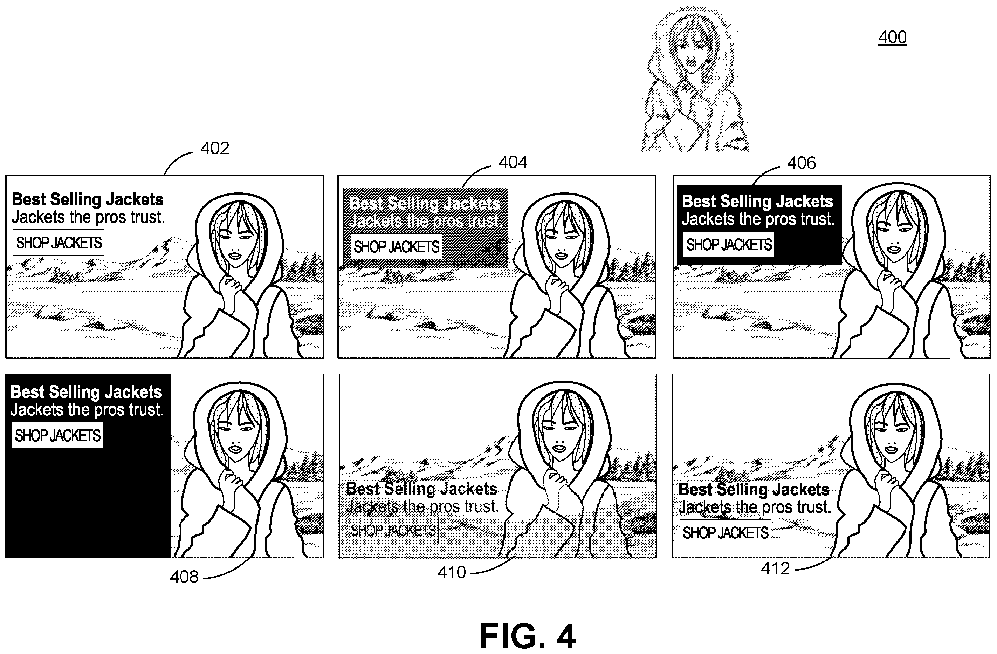

FIG. 4 illustrates various media content items being overlaid over a candidate image. Image 402 illustrates a media content item in one bounding box. In this instance the dimensions of the bounding box are not apparent from the overlay. Image 404 illustrates an example of a bounding box that fits the media content item. The bounding box may be illustrated by the box around the media content item. In this case, the media content item may be text or an image. In some embodiments, the media content item may be associated with a selectable graphical user element that when selected instructs a computing device to open a link to, for example, a web page associated with the content of the bounding box.

Image 406 illustrates another media content item that may use the same bounding box. It should be noted that the media content items in image 404 and 406 are different. The media content item in image 404 has a transparent component while the media content item in image 406 has no transparent portions. Images 408, 410, and 412 illustrate other examples of bounding boxes on the same image.

### OVERALL PROCESS USING NEURAL NETWORKS

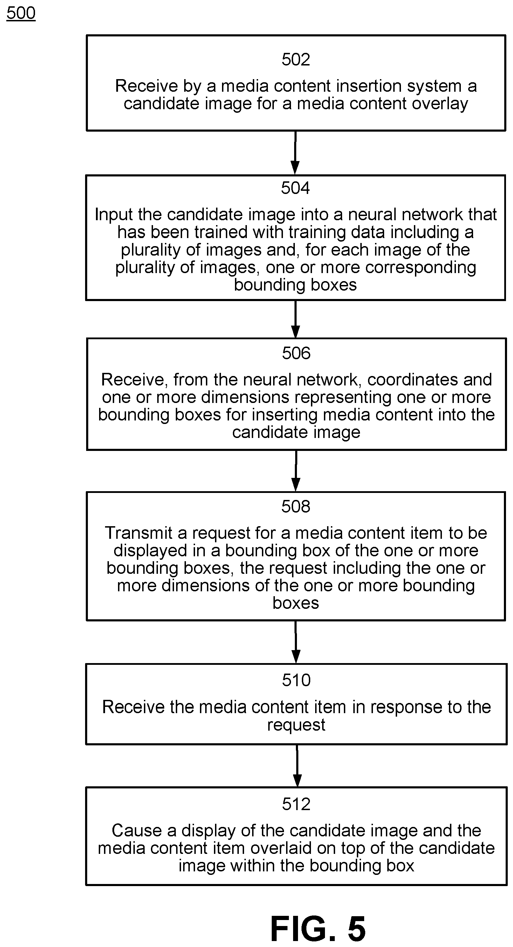

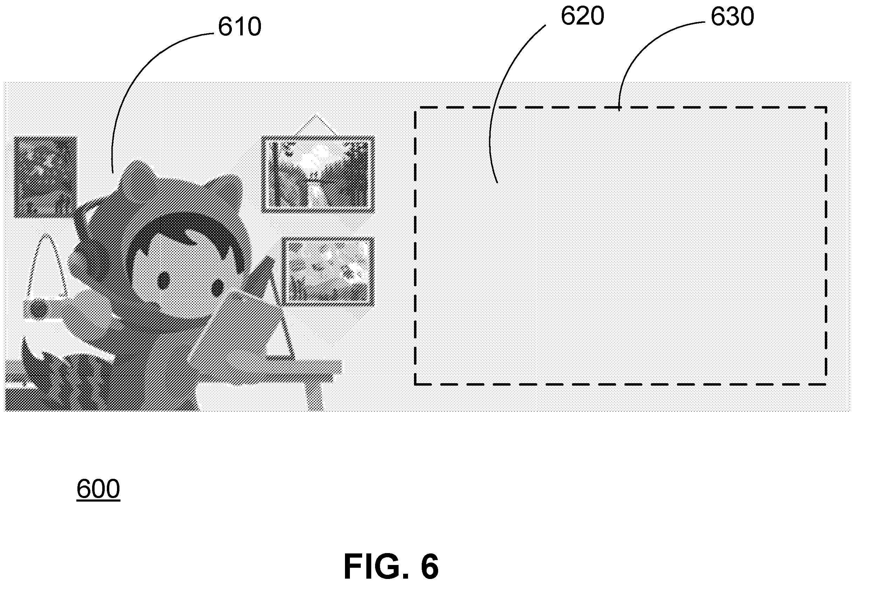

FIG. 5 is a flowchart illustrating an overall process for detecting space suitable for overlaying media content onto an image using a neural networks-based approach, as performed by the neural networks-based media content insertion system 160, according to one embodiment. Various embodiments can perform the steps of FIG. 6 in different orders than those indicated herein. Moreover, other embodiments can include different and/or additional steps than the ones described herein.

At 502, media content insertion system 160 receives a candidate image for a media content overlay. For example, media content insertion system 160 may receive the candidate image through a network using a network interfaced device. Media content insertion system 160 may store the candidate image in memory.

At 504, media content insertion system 160 inputs the candidate image into a neural network that has been trained with training data including a plurality of images and, for each image of the plurality of images, one or more corresponding bounding boxes. The neural network may be stored in a memory. The neural network may include an application programming interface for inputting images and corresponding metadata. Media content insertion system 160 may use one or more processors to perform the input and may use those same processors to process the candidate image within the neural network.

At 506, media content insertion system 160 receives, from the neural network, coordinates and one or more dimensions representing one or more bounding boxes for inserting media content into the candidate image. Media content insertion system 160 may receive the coordinates and dimensions and store them in memory.

At 508, media content insertion system 160 transmits a request for a media content item to be displayed in a bounding box of the one or more bounding boxes, the request including the one or more dimensions of the one or more bounding boxes. For example, media content insertion system 160 may use a network interface device to transmit the request over a network.

At *510,* media content insertion system 160 receives the media content item in response to the request. For example, media content insertion system 160 may receive the request using a network interface device through a network. At 512, media content insertion system 160 causes a display of the candidate image and the media content item overlaid on top of the candidate image within the bounding box. For example, media content insertion system 160 may transmit the overlaid candidate image to a client device for display. In some embodiments, media content insertion system 160 may use a visual interface to cause the display of the overlaid candidate image.

### MEDIA CONTENT INSERTION IN VIDEO CONTENT ITEMS USING NEURAL NETWORKS

In some embodiments, the image may be a frame of a video content item. Media content insertion system 160 may process those frames in a different manner. For example, media content insertion system 160 may determine that the candidate image is a video frame associated with a video content item. Overlay generation module 190 may make the determination based on an indicator in the image metadata or based on another signal received with the candidate image.

Bounding box detection module 180 may retrieve a set of video frames of the video content item. For example, the bounding box detection module may request the frames using an application programming interface (API). The set of video frames may include video frames that are played subsequently to the candidate image. For example, the candidate image may be a first frame in a set of consecutive frames to be played back by a video player and it may be desirable to insert a media content item (e.g., an advertisement) into at least some of those frames.

Bounding box detection module 180 may input each video frame of the set of video frames into the neural network. For example, bounding box detection module 180 may input the frames into the neural network consecutively based on order of playback. Bounding box detection module may receive, from the neural network for each video frame in the set of video frames, corresponding coordinates and corresponding dimensions representing one or more bounding boxes. That is, bounding box detection module 180 may process each video frame in the same manner as a candidate image to identify on or more bounding boxes in each frame.

Bounding box detection module 180 may identify in each video frame of the set of video frames, a bounding box matching a bounding box in each other video frame within the set. For example, bounding box detection module 180 may determine that the same copy space (e.g., bounding box) is available on all the frames in the set or at least a subset of frames in the set. Bounding box detection module 180 may then include the bounding box in the request. In some embodiments, bounding box detection module may detect one bounding box in some frames in the set and another bounding box in other frames. Based on that bounding box detection module 180, may include both bounding boxes in the request. After the response to the request is received, overlay generation module 190 may cause a display of the set of video frames and the media content item overlaid on top of each of the plurality of subsequent video frames within the bounding box. That is, the video may be played back with one or more bounding boxes included in one or more consecutive frames.

### HEURISTICS-BASED SYSTEM FOR COPY-SPACE DETECTION

Disclosed herein are system, method and computer readable storage medium for a heuristics-based approach for detecting space suitable for overlaying media content onto an image (i.e., copy space, insertion space). The system receives an image which may be an image or a video frame. Generally, an image or a video frame may have space for inserting media content without covering vital portions of the image. Embodiments of the system process the image to determine occupied and unoccupied spaces in the image, and subsequently select regions in the unoccupied spaces to overlay media content on the image. The image is processed using a number of image processing techniques in order to automatically propose spaces for inserting media content onto the candidate image. The proposed spaces may then be further analyzed using a heuristic rules-based approach to select insertion spaces for inserting media content. The selected insertion spaces may be defined by bounding boxes by the system. Subsequently, one or more media content items may be selected for insertion onto the selected bounding boxes in the image. The system may then cause a display of the image with the selected media content item overlaid onto the image within the selected bounding boxes.

FIG. 6 illustrates an exemplary image 600. As depicted, one portion 610 of the image 600 may have multiple visual elements, while another portion 620 of the image 600 may be devoid of visual elements or may be identified as having visually non-essential elements (for e.g., textural background, blank space, clouds, tree canopy, beach sand, etc.). Embodiments described herein are directed to automatically identify insertion spaces, also termed bounding boxes herein, with visually non-essential elements, and where media content items may be inserted without visually impacting any visually essential elements of the image. For example, an insertion space 630 may be identified by an embodiment such that any media content may be overlaid on top of image 600 within the identified insertion space 630.

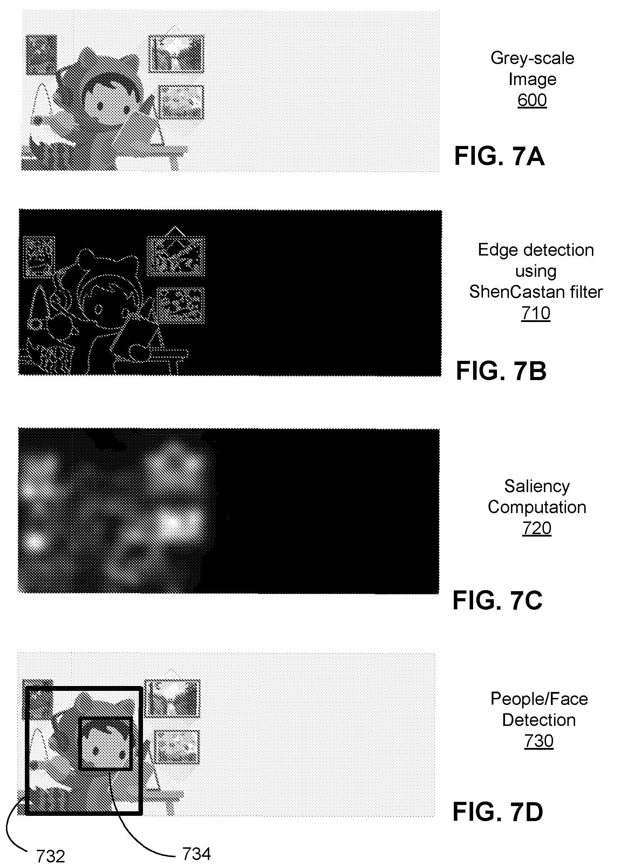

FIGs. 7A-7D illustrate exemplary image processing that may be performed on an image in accordance with some embodiments.

FIG. 7A shows the greyscale image 600 depicted in FIG. 6. In embodiments described herein, when insertion space needs to be selected for a color image, preprocessing may be performed on the color image to first obtain a corresponding greyscale image 600 and subsequently processed as described herein. In some embodiments, the greyscale image 600 may be blurred (e.g., by using a low pass filter) to remove noise in the image before further processing occurs.

FIG. 7B depicts the results 710 of performing edge detection on the image 600. The identified image discontinuities in the gradient image 600 are organized by an edge detection filter into a set of line segments, i.e., edges. The depicted edge-detected image 710 is obtained using the ShenCasten edge detection filter on gradient image 600. Similar results may be obtained using the Sobel filter.

FIG. 7C depicts the results 720 of performing saliency filtering on the edge-detected image 710. Saliency filtering is an image segmentation process that assists in locating objects and boundaries. The depicted saliency-filtered image 720 is obtained using the saliency filter on edge detected image 710.

FIG. 7D depicts the results 730 of further processing the greyscale image 600 to block out text, faces, and people using single shot text detector (ssd) networks and standard classifiers and object detection. This processing determines regions 732 and 734 which are subsequently blocked out as occupied spaces by people detection and face detection classifiers. While not depicted herein, any textual elements in the greyscale image 600 may also be blocked out by processing the image 600 using ssd networks. In embodiments herein, this processing to block out text, faces, and people may be carried out as independent processing on the greyscale image 600 to provide further indications of occupied and unoccupied space, in addition to the image processing described herein.

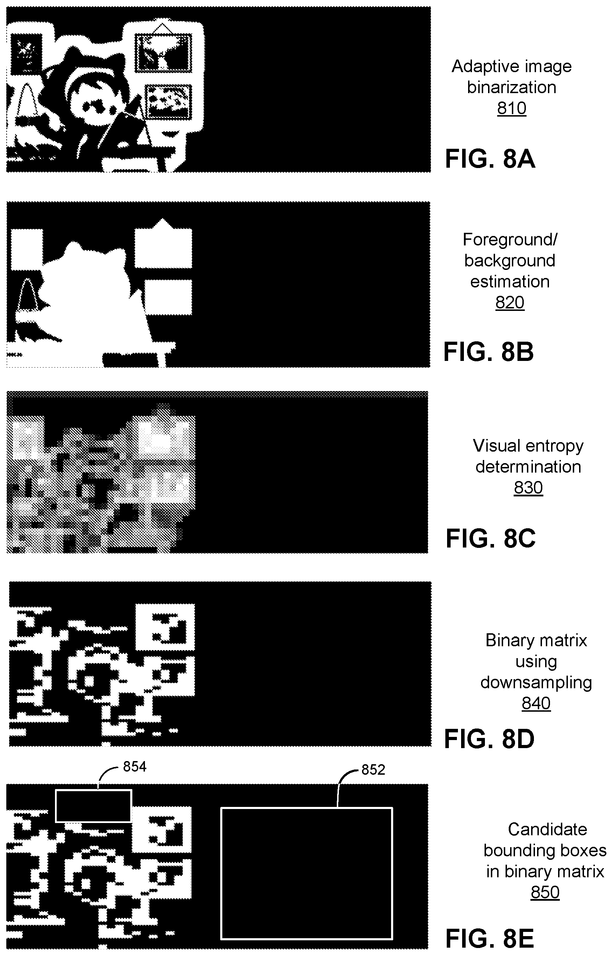

FIGs. 8A-8E illustrate exemplary image processing that may be performed on an image to generate a binary matrix in accordance with an embodiment.

FIG. 8A depicts the results 810 of performing local adaptive binarization on the saliency filtered image 730.

FIG. 8B depicts a foreground/background separation image 820 that is generated from the original greyscale image 600 and the saliency filtered image 730 on which adaptive binarization has been performed, i.e., on image 810.

FIG. 8C depicts the results of using a visual entropy filter on the foreground/background separation image 820 to generate the visual entropy filtered image 830.

FIG. 8D depicts the generation of a binary matrix image 840 from the visual entropy filtered image 830 using downsampling. A binary matrix image 840 has values of 0's and 1's (representing black and white values respectively) for each pixel. Thus, unoccupied spaces in the binary matrix image or the downsampled binary matrix image may be viewed, without limitation, as consisting of spaces with pixel values of '0'.

FIG. 8E depicts an image 850 in which candidate bounding boxes have been proposed in the binary matrix image 840. A "max rectangle in binary matrix" technique may be used to establish a set of rectangle candidates that satisfy predefined threshold parameters (e.g., a minimum width, a minimum height, etc.). Image 850 depicts two exemplary bounding box candidates 852 and 854.

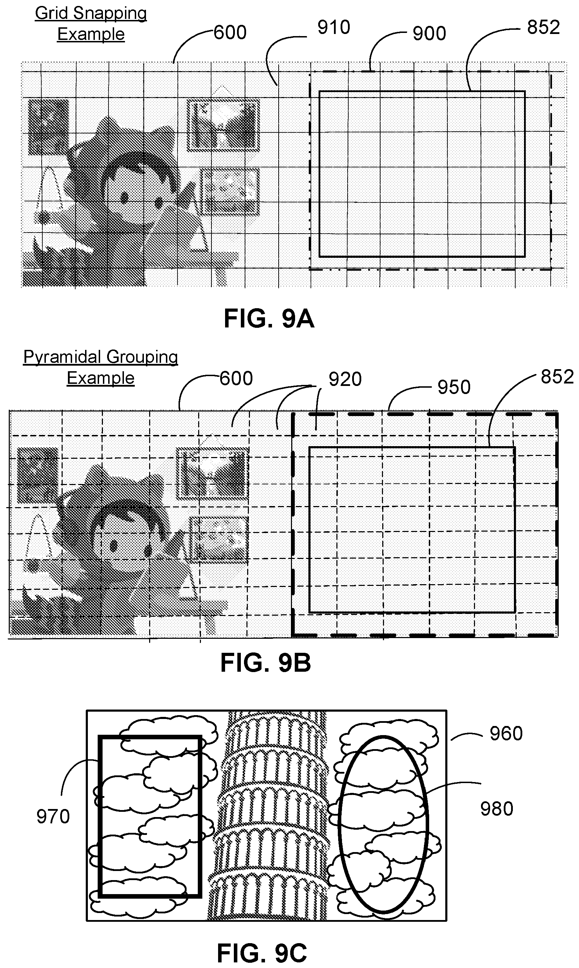

FIG. 9A depicts applying an example of a heuristic rule to select an optimal bounding box. An optimal bounding box candidate may be first selected using non-max suppression techniques based on Intersection over Union (IoU) approaches combined with confidence thresholds. In image 600, this results in the choice of bounding box 852 as the optimal bounding box candidate. A subsequent heuristic rule may be applied to the optimal bounding box candidate involving a grid snapping approach in which an imaginary grid is superimposed on the image, and an optimal bounding box is chosen by snapping the optimal bounding box candidate to the superimposed grid. Thus, grid 910 may be imposed on the image 600, and optimal bounding box 900 may be chosen as the insertion space for media content item by the grid snapping process, since bounding box 900 may be the closest bounding box from bounding box 852 when snapped to the grid 910.

FIG. 9B depicts applying another example of a heuristic rule to select an optimal bounding box. Once an optimal bounding box candidate is chosen (e.g., using non-max suppression techniques based on Intersection over Union (IoU) approaches, etc.) another heuristic rule applied in some embodiments involves a pyramidal column grouping approach. In this approach, the image may be divided into multiple columns with the columns themselves grouped in a pyramid style. For example, the image may be divided into twelve columns, with four groups of three columns each, three groups of four columns, two groups of six columns each and a final group of all twelve columns. The group of columns that exhibits the best (i.e., within a predefined minimum threshold) overlap with the optimal bounding box candidate is chosen as the optimal bounding box. Thus, in FIG. 9B, the image 600 is divided into columns 920. The grouping 950 of six columns is subsequently chosen as the closest overlapping group to the optimal candidate bounding box 852. The insertion space for media content item is selected to be the space 950.

FIG. 9C illustrates another image 960 with two exemplary corresponding bounding boxes (bounding box 970 and bounding box 980). Fig. 9C illustrates that heuristic rules may be applied that define preferred shapes for selecting optimal bounding boxes, and that more than one optimal bounding box may be selected in accordance with some embodiments for inserting media content items. Thus, bounding box 970 is a rectangle, while bounding box 980 is an ellipse.

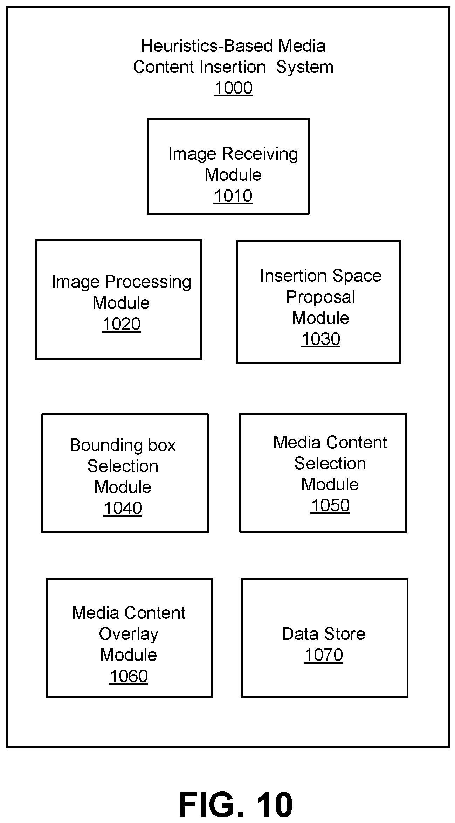

FIG. 10 is a block diagram illustrating components of a heuristics-based media content insertion system 1000, in accordance with some embodiments. The heuristics-based media content insertion system 1000 includes an image receiving module 1010, an image processing module 1020, an insertion space proposal module 1030, a bounding box selection module 1040, a media content selection module 1050, a media content overlay module 1060, and a data store 1070. Other embodiments may include more or fewer modules than those shown in FIG. 10. Functionality indicated as being performed by a particular module may be performed by other modules than those indicated herein. Furthermore, steps of any processes described herein can be performed in an order different from that illustrated herein.

The image receiving module 1010 receives an image for overlaying media content items. The image receiving module 1010 may receive the image over a network or may receive instructions for retrieving the image from an image store. The image may be any appropriately formatted image. In some embodiments, the image may be a frame of a video content item that is also received by the image receiving module 1010. In some embodiments, the image receiving module 1010 may receive a video content item and extract image frames from the received video content item for further processing. In some embodiments, the image receiving module 1010 may receive an identifier for a specific starting image frame (e.g., a time value associated with the specific frame) such that display of the video content from that frame onwards requires insertion of media content. In these embodiments, the specific starting image frame as well as image frames in the video content subsequent to the specific image frame may be processed by the heuristics-based media content insertion system 1000. In some embodiments, the image receiving module 1010 may receive an identifier for a specific ending image frame (e.g., an ending time value, a starting time value and a time interval, etc.). In these embodiments, the image frames extracted and stored for processing by the heuristics-based media content insertion system 1000 may involve the frames that occur from the starting image frame up to and including the ending image frame. For example, the starting image frame may be a first frame in a set of consecutive frames to be played back by a video player and it may be desirable to insert a media content item (e.g., an advertisement) into at least some of those frames. The image receiving module 1010 may pass the one or more images to the image processing module 1020 or may store the received image in the data store 1070 for retrieval by other modules of the heuristics-based media content insertion system 1000.

The image processing module 1020 processes the image using one or more image processing techniques. The image processing module 1020 receives an image from the image receiving module 1010. In some embodiments, the image processing module 1020 may retrieve the image from the data store 1070. In an embodiment, the image may be a color image. In this case, the image processing module 1020 may first obtain a corresponding greyscale image. In some embodiments, the greyscale image 100 may be blurred (e.g., by using a low pass filter) to remove noise in the image before further processing occurs. The greyscale image may subsequently filtered using a gradient filter. The gradient filtering is performed to perform edge detection in the image, i.e., identify pixel locations where the image brightness changes by at least some predefined threshold. An example of a gradient filter is the Sobel gradient filter. In some embodiments, the greyscale image may be filtered by the image processing module 1020 using an edge detection filter instead of using a gradient filter. Any suitable edge detection filter, such as the ShenCasten filter, the Sobel filter, or the Canny edge detector, etc., may be used by the image processing module 1020. The edge-detected image is then processed by the image processing module 1020 using an image saliency filter that performs local image segmentation.

Some embodiments of the image processing module 1020 may use supplemental machine learning techniques to identify text, people and faces in the greyscale or RGB image - e.g., text in the image may be located using a single-shot text detector (ssd) network that identifies locations of words while people and faces in the image may be located using object classifiers. The identified text, people, and face regions in the image may then be blocked out as occupied spaces in the image.

The image processing module 1020 performs adaptive binarization on the saliency filtered image uses the adaptive binarized image along with the original greyscale image to perform foreground/background estimation and generate a foreground/background estimated image. Visual entropy filtering may be performed by the image processing module 1020 to generate a binary matrix image. This binary matrix image may be subsequently downsampled. The image processing module 1020 may retrieve predefined parameter values for performing the various image processing techniques described herein from the data store 1070. In some embodiments, the image processing module 1020 may store the downsampled binary matrix image in the data store. In some embodiments, the image processing module 1020 may send the downsampled binary matrix to the insertion space proposal module 1030.

The insertion space proposal module 1030 generates one or more proposed spaces in the image for media content item overlay. The insertion space proposal module 1030 receives the downsampled binary matrix image generated by the image processing module 1020. The insertion space proposal module 1030 may retrieve the downsampled binary matrix image from the data store or it may receive the downsampled binary matrix image from the image processing module 1020. The module 1030 may also retrieve predefined minimum threshold parameters (e.g., width of rectangle, height of rectangle, and area of rectangle, etc.) from the data store 1070.

The binary matrix image has values of 0's and 1's (representing black and white values respectively) for each pixel. Thus, unoccupied spaces in the binary matrix image or the downsampled binary matrix image may be viewed, without limitation, as consisting of spaces with pixel values of '0'. The insertion space proposal module 1030 determines rectangular spaces that satisfy the predefined minimum threshold parameters and that fit into the unoccupied spaces in the downsampled binary matrix image received from the image processing module 1020. In determining the rectangular spaces, the insertion space proposal module 1030 may use a suitable variant of a "max rectangle in binary matrix" technique. The "max rectangle in binary matrix" technique determines possible rectangles in the downsampled binary matrix that reside in the unoccupied spaces and that satisfy the predefined minimum threshold parameters. In some embodiments, all determined rectangular spaces (i.e., rectangles) may be placed in a list that is sorted by area. In some embodiments, the insertion space proposal module 1030 may store the sorted list of proposed rectangles in the data store 1070. In some embodiments, the insertion space proposal module 1030 may provide the sorted list of the rectangular spaces as the one or more proposed spaces for media content item overlay in the received image to the bounding box selection module 1040. In some embodiments, the rectangles in the sorted list of rectangles may be each associated with a confidence measure. An exemplary confidence measure associated with a rectangle in the sorted list may be based on the occupied space residing within the rectangle when superimposed on the binary matrix image that is generated prior to being downsampled.

The bounding box selection module 1040 applies one or more heuristic rules to automatically select bounding boxes in the image for media content item overlay from the proposed one or more spaces. The bounding box selection module 1040 receives a set of proposed rectangles and associated confidence measures from the insertion space proposal module 1030. The set of proposed rectangles may be in the form of the sorted list of rectangles generated by the insertion space proposal module 1030. A bounding box refers to an area on an image that is selected as an insertion space for placing media content items. In an embodiment, multiple bounding boxes may be generated based on the number of media content items that may need to be inserted in the image. The information regarding the number of media content items that may need to be inserted may be retrieved from the data store by the bounding box selection module 1040. In embodiments described herein, the bounding box may be any shape, including but not limited to, a rectangle, a square, a circle, a polygon, and any other suitable shape. The bounding box may be of an irregular dimension and/or combine multiple shapes. For example, a bounding box may be a square (e.g., represented by a coordinate and one offset), a circle (e.g., represented by a coordinate being the center of the circle and one dimension representing a radius or a diameter of the circle), an ellipse (e.g., represented by two radii and a coordinate at the center). In some embodiments, a bounding box may be described by a vector of points representing coordinates on the image. The vectors and connections of those vectors may represent a bounding box.

The bounding box selection module 1040 applies heuristic rules to the sorted list of rectangles to select a target number of bounding boxes for media content item overlay from the proposed rectangles in the sorted list. The target number of bounding boxes may be based on a target number of media content items that need to be overlaid on the image. The heuristic rules applied to select the target number of bounding boxes for media content item insertion in the image may include heuristic rules that are based on core design principles. Such heuristic rules may include rules enforcing similarity between rectangles, enforcing proximity between rectangles, enforcing closure for a combination of rectangles to generate a combined irregular polygonal space, etc. The heuristic rules applied by the bounding box selection module 1040 may have predefined priorities associated with them that define an order in which the heuristic rules may be applied. The bounding box selection module 1040 may retrieve the heuristic rules as well as associated predefined threshold parameters for applying the heuristic rules from the data store 1070.

In some embodiments, the bounding box selection module 1040 may prune the sorted list generated by the insertion space proposal module 1030 by selecting a single rectangle from each subset of rectangles in the list that meet a predefined threshold criteria for similarity (i.e., retain only dissimilar rectangles). The predefined similarity threshold parameters may be combinations of parameters such as location, area, width, and height for the proposed rectangles (for example, a heuristic rule for similarity may be that "two proposed rectangles are similar if the centroids of the two rectangles are located on the image at less than a predefined threshold distance from each other, and their aspect ratios differ by less than a predefined threshold value," a heuristic rule for pruning may be "if a subset of rectangles are labelled as similar, replace all of them by a single rectangle that is a weighted combination of individual rectangles in the subset," etc.). In some embodiments, the bounding box selection module 1040 may use a variant of a "non-max suppression technique" based on an iterative approach using intersection over union (IoU) ratios in association with the confidence measures for pairs of proposed rectangles to select one or more rectangles.

In some embodiments, a heuristic rule may be applied to modify the selected rectangles to a minimal extent needed to ensure that the bounding boxes are the resulting rectangles that are affixed to lie (i.e., snapped) on an grid that is superimposed on the image. In some embodiments, another heuristic rule may involve a pyramidal column grouping approach. In this approach, the image may be divided into multiple adjacent columns with the adjacent columns themselves grouped in a pyramid style. For example, the image may be divided into twelve columns, with four groupings of three adjacent columns each, three groupings of four adjacent columns, two groupings of six adjacent columns each and a final grouping of all twelve columns. A heuristic rule may be applied to determine, for each of the selected rectangles, a grouping of adjacent columns from among the groupings of columns that overlaps best with the selected rectangle. Thus, a generated bounding box may be selected for media content overlay in the image based on determining a grouping of adjacent columns from multiple groupings of columns that are superimposed on the image such that the determined grouping of columns satisfies a predefined minimum threshold of overlap with a selected rectangle.

In some embodiments, the heuristic rules may specify predefined target properties for the generated bounding boxes, such as choosing a predefined number of bounding boxes, a target area, a target shape, target aspect ratios, and target location of a bounding box. For example, a heuristic rule may specify a preference for a media content overlay that takes the form of "a single banner that is overlaid centrally on the top of the image." In some embodiments, if there is additional information that provides estimated depth values to pixel locations in the image, these depth estimates may also be used to select bounding boxes.

In some embodiments, the bounding box selection module 1040 may generate the bounding box as a weighted combination of the selected one or more rectangles, the weights based on confidence measure associated with each of the selected rectangles. A bounding box may be described by parameters describing a location of the bounding box in the received image and parameters describing a layout of the bounding box in the received image. For example, a bounding box may be described by a rectangle including one or more coordinates on the image and one or more dimensions extending from the one or more coordinates. The coordinates may represent a particular pixel on the image. In some embodiments, a bounding box may be represented by a coordinate that is counted in terms of a number of pixels horizontally and vertically from the upper left-hand comer of the image and two dimensions. That coordinate may represent the upper left-hand corner of the bounding box. The two dimensions may include a vertical offset and a horizontal offset extending from the coordinate. Based on the coordinate and the offsets, a rectangular bounding box having an area based on the offsets and the location based on the coordinate may be generated. Other descriptions of the bounding box are possible in embodiments described herein, e.g., an ellipse that is a closest circumscribing ellipse to the weighted combination of the selected rectangles, etc. In some embodiments, the insertion space selection module 1040 may store the description of a bounding box in the data store 1070. In some embodiments, the bounding box selection module 1040 may send the description of the bounding box to the media content overlay module 1060.

The media content selection module 1050 may receive the description of one or more bounding boxes. In some embodiments, the media content selection module 1050 may retrieve the description of the one or more bounding boxes from the data store 1070. The media content selection module 1050 may extract dimensions from the descriptions associated with each bounding box and search for media content items in the data store 1070 having dimensions that best match the extracted dimensions. The media content selection module 1050 may select media content items from multiple media content items based on the dimensions of the content item matching the dimensions of a bounding box. Media content selection module 1050 may retrieve the selected one or more media content items from the data store 1070. In some embodiments, in addition to each selected media content item, the media content selection module 1050 may extract metadata associated with each media content item. The metadata may include the dimensions of the corresponding media content item as well as other information (e.g., name, type (image, video, etc.)), orientation, and/or other suitable information. The media content selection module 1050 may send the selected media content item and associated metadata to the media content overlay module 1060. In some embodiments, the media content selection module 1050 may alternatively send one or more identifiers of the selected media content items to the media content overlay module 1060. Each identifier may be part of a data structure that also includes dimensions for each media content item. Other information may be included in the data structure (e.g., name, type (image, video, etc.)). This may be advantageous because media content items may be large in size and may take a long time to transfer in comparison to just transferring an identifier.

The media content overlay module 1060 receives descriptions of one or more bounding boxes. In some embodiments, the descriptions may be received from the bounding box selection module 1040. In some embodiments, the media content overlay module 1060 may retrieve the description from the data store 1070. The media content overlay module 1060 may receive the media content items to be displayed in a bounding box from the media content item selection module 1050. In some embodiments, the media content overlay module 1060 may retrieve the media content items from the data store 1070.

As noted previously, in some embodiments, the image may be an image frame of a video content item. The media content overlay module 1060 may store location and layout information about the determined bounding boxes for one or more of the preceding frames, and apply heuristic rules to modify any of: the dimensions, layout, or location of the determined bounding boxes received from the bounding box selection module 1040 to ensure that there is a smooth transition of the overlaid media content in each of the video frame images being displayed subsequent to the display of the received image when displaying the video content item.

The data store 1070 receives and stores data for use and easy access by modules of the heuristics-based media content insertion system 1000. The data store 1070 may store one or more images received from the image receiving module 1010. The data store 1070 may store the binary matrix as well as the downsampled binary matrix generated by the image processing module 1020. The data store 1070 stores heuristic rules and threshold parameter values for use by processes that are executed by modules of the media content insertion system 1000, for e.g., target bounding box description parameters, number of target bounding boxes, target area, location, and shape parameters, etc. The data store 1070 may store intermediate data for use by the various modules of the heuristics-based media content insertion system 1000, such as a proposed list of rectangles that may be used for selecting the actual insertion spaces. In some embodiments, the data store 1070 may also be used to store media content items and associated metadata parameter values. The data store 1070 is a memory, such as a read only memory (ROM), dynamic random-access memory (DRAM), static random-access memory (SRAM), or some combination thereof.

### OVERALL PROCESS

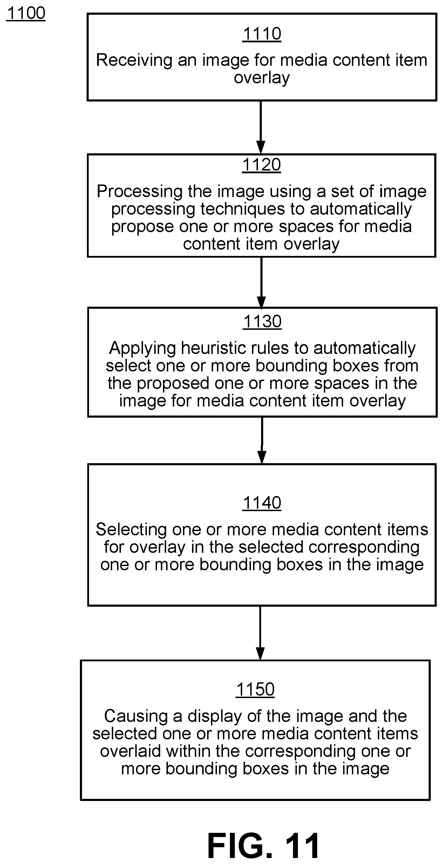

FIG. 11 is a flowchart illustrating an overall process for detecting space suitable for overlaying media content onto an image, as performed by the heuristics-based media content insertion system 1000, according to one embodiment. Various embodiments can perform the steps of FIG. 11 in different orders than those indicated herein. Moreover, other embodiments can include different and/or additional steps than the ones described herein.

The heuristics-based media content insertion system 1000 receives 1110 an image for media content item overlay. For example, heuristics-based media content insertion system 1000 may receive 1110 the image over a network or may receive instructions for retrieving the image from an image store. The heuristics-based media content insertion system 1000 may receive 1110 a video content item and may extract one or more image frames from the video content item.

The heuristics-based media content insertion system 1000 processes 1120 the received image using one or more image processing techniques to automatically generate one or more proposed spaces in the image for media content item overlay. The image processing techniques performed by the heuristics-based media content insertion system 1000 include any combination of generating a greyscale images, blurring the image, performing gradient filtering or edge detection filtering, saliency filtering, using supplemental machine learning methods such as ssd networks and classifiers for text, people and face detection, foreground/background estimation, visual entropy filtering, generating a binary matrix, and downsampling, etc. The heuristics-based media content insertion system 1000 determines rectangular spaces that satisfy predefined minimum threshold parameters in a binary matrix of the image, blocks out text and faces in the rectangular spaces in the generated binary matrix. Subsequently, the heuristics-based system 1000 generates a sorted list of the rectangular spaces, wherein the sorting is performed based on a predefined parameter (e.g., area), and provides the rectangular spaces in the generated sorted list as one or more proposed spaces for media content item overlay in the image.

The heuristics-based media content insertion system 1000 applies 1130 heuristic rules to automatically select one or more bounding boxes from the one or more proposed spaces in the image for media content item overlay. The heuristic rules may be prioritized for application by the heuristics-based media content insertion system 1000. The heuristic rules may involve, for example, (i) generating a bounding box based on modifying one or more proposed spaces to lie on a grid that is superimposed on the image, (ii) dividing the image into a number of adjacent columns, grouping the columns in a pyramidal manner, and generating a bounding box generated by selecting a group of adjacent columns that overlaps with a proposed space by at least a predefined threshold value (e.g., at least 80% of the selected rectangle overlaps with the selected group of adjacent columns), (iii) generating a bounding box that is a weighted combination of the one or more proposed spaces, (iv) generating a bounding box based on predefined target properties using the one or more proposed spaces, with predefined target properties including, e.g., number of bounding boxes, area, shape, aspect ratio, and location of a bounding box, etc., among other heuristic rules.

The heuristics-based media content insertion system 1000 selects 1140 media content items for overlay in the selected corresponding one or more bounding boxes in the image. In some embodiments, heuristics-based media content insertion system 1000 may receive the description of one or more bounding boxes, and select media content items from multiple media content items based on the dimensions of the media content item matching the dimensions of a received description of a bounding box.

The heuristics-based media content insertion system 1000 causes 1150 a display of the image and the selected one or more media content items overlaid within the corresponding one or more bounding boxes in the image. For example, the heuristics-based media content insertion system 1000 may transmit the overlaid candidate image to a client device for display. In some embodiments, the media content insertion system 1000 may use a visual interface to cause the display of the overlaid candidate image.

### COMPUTING MACHINE ARCHITECTURE

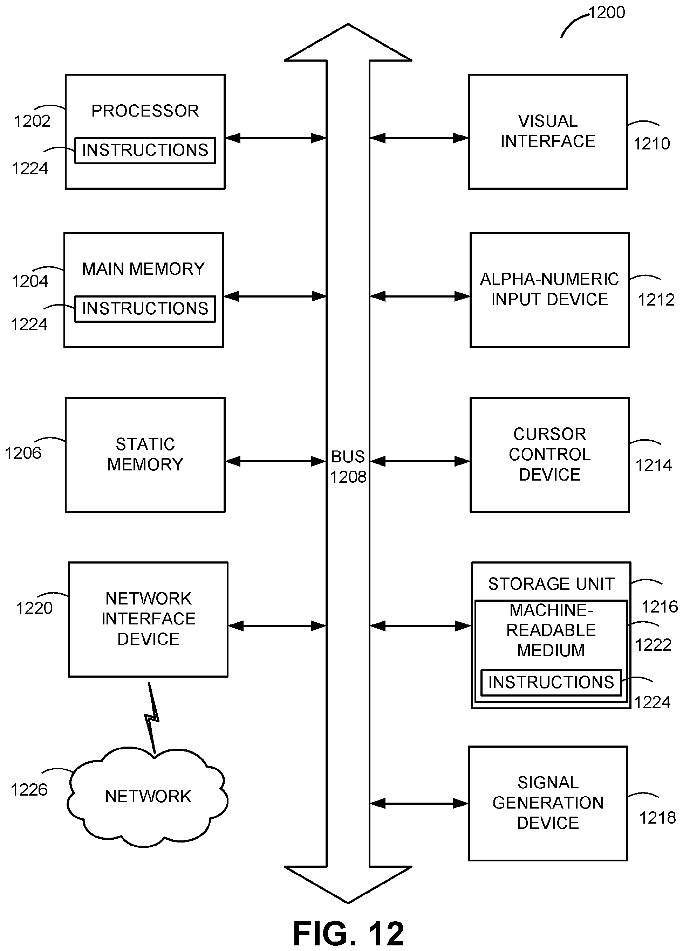

Each of media content storage system 100 and neural networks-based media content insertion system 160 depicted in FIG. 1, and the heuristics-based media content insertion system 1000 depicted in FIG. 10 may include one or more components described in FIG. 12. FIG. 12 is a block diagram illustrating components of an example machine able to read instructions from a machine-readable medium and execute them in a processor (or controller). Specifically, FIG. 12 shows a diagrammatic representation of a machine in the example form of a computer system 1200 within which program code (e.g., software) for causing the machine to perform any one or more of the methodologies discussed herein may be executed. The program code may be comprised of instructions 1224 executable by one or more processors 1202. In alternative embodiments, the machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment.

The machine may be a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions 1224 (sequential or otherwise) that specify actions to be taken by that machine. Further, while only a single machine is illustrated, the term "machine" shall also be taken to include any collection of machines that individually or jointly execute instructions 1224 to perform any one or more of the methodologies discussed herein.

The example computer system 1200 includes a processor 1202 (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory 1204, and a static memory 1206, which are configured to communicate with each other via a bus 1208. The computer system 1200 may further include visual display interface 1210. The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface 1210 may include or may interface with a touch enabled screen. The computer system 1200 may also include alphanumeric input device 1212 (e.g., a keyboard or touch screen keyboard), a cursor control device 1214 (e.g., a mouse, a trackball, a joystick, a motion sensor, or other pointing instrument), a storage unit 1216, a signal generation device 1218 (e.g., a speaker), and a network interface device 1220, which also are configured to communicate via the bus 1208.

The storage unit 1216 includes a machine-readable medium 1222 on which is stored instructions 1224 (e.g., software) embodying any one or more of the methodologies or functions described herein. The instructions 1224 (e.g., software) may also reside, completely or at least partially, within the main memory 1204 or within the processor 1202 (e.g., within a processor's cache memory) during execution thereof by the computer system 1200, the main memory 1204 and the processor 1202 also constituting machine-readable media. The instructions 1224 (e.g., software) may be transmitted or received over a network 1226 via the network interface device 1220.

While machine-readable medium 1222 is shown in an example embodiment to be a single medium, the term "machine-readable medium" should be taken to include a single medium or multiple media (e.g., a centralized or distributed database, or associated caches and servers) able to store instructions (e.g., instructions 1224). The term "machine-readable medium" shall also be taken to include any medium that is capable of storing instructions (e.g., instructions 1224) for execution by the machine and that cause the machine to perform any one or more of the methodologies disclosed herein. The term "machine-readable medium" includes, but not be limited to, data repositories in the form of solid-state memories, optical media, and magnetic media.

The components of FIG. 12 may be used in a system or process for detecting space suitable for overlaying media content onto an image using a neural networks-based approach and a heuristics-based approach among others.

### ADDITIONAL CONFIGURATION CONSIDERATIONS

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

## Claims

1. A computer implemented method for detecting space suitable for overlaying media content onto an image (100, 200), the method comprising:
training a neural network using a plurality of images (408, 410), each of the plurality of images (408, 410) corresponding to one or more vectors, each vector comprising: a coordinate representing a point associated with a bounding box (202, 222) in a corresponding image, and a dimension of the bounding box (202, 222), wherein each bounding box (202, 222) is suitable for media content overlay;
receiving by a media content insertion system (160, 1000) a candidate image for a media content overlay;
inputting the candidate image into the neural network;
outputting, by the neural network, one or more bounding boxes as one or more data structures (300), each of which comprises at least a coordinate representing a point associated with the bounding box (202, 222), a dimension of the bounding box (202, 222), and a probability that the bounding box (202, 222) is located in an area suitable for the media content overlay;
for at least one of the one or more bounding boxes, determining whether the probability meets a threshold probability;
responsive to determining that the probability meets the threshold probability, determining that the bounding box (202, 222) is a candidate bounding box (852) of the candidate image;
receiving, from the neural network, the data structure (300) corresponding to the candidate bounding box (852) of the candidate image;
transmitting a request for a media content item to be displayed in the candidate bounding box (852), the request comprising the dimension of the candidate bounding box (852);
receiving the media content item in response to the request; and
causing a display of the candidate image and the media content item overlaid on top of the candidate image within the candidate bounding box (852).

2. The method of claim 1, further comprising:
receiving the plurality of images (408, 410); and
receiving for each of the plurality of images (408, 410) one or more vectors.

3. The method of claim 1, wherein receiving the data structure (300) corresponding to the candidate bounding box (852) of the candidate image comprises receiving for each bounding box (202, 222):
a first coordinate representing a first offset along a horizontal axis of the candidate image and a second coordinate representing a second offset along a vertical axis of the candidate image,
a first dimension extending from the first coordinate along the horizontal axis, and
a second dimension extending from the second coordinate along the vertical axis.

4. The method of claim 1, further comprising:
in response to the request, receiving a plurality of media content items corresponding to the one or more bounding boxes;
identifying from the plurality of media content items, a particular media content item corresponding to a bounding box (202, 222) with the highest probability; and selecting the particular media content item as the media content item.

5. The method of claim 1, further comprising:
determining that the candidate image is a video frame associated with a video content item;
retrieving a set of video frames of the video content item, wherein the set of video frames comprises video frames that are played subsequently to the candidate image;
inputting each video frame of the set of video frames into the neural network;
receiving, from the neural network for each video frame in the set of video frames, corresponding coordinates and corresponding one or more dimensions representing one or more bounding boxes;
identifying in each video frame of the set of video frames a bounding box (202, 222) matching a bounding box (202, 222) in each other video frame within the set; and
including the bounding box (202, 222) matching the bounding box (202, 222) of each other video frame in the request.

6. The method of claim 5, further comprising causing a display of the set of video frames and the media content item overlaid on top of each of the plurality of subsequent video frames within the bounding box.

7. A system (160, 1000) for detecting space suitable for overlaying media content onto an image (100, 200), the system (160, 1000) comprising:
memory with instructions (1224) encoded thereon; and
one or more processors that, when executing the instructions (1224), are caused to perform operations comprising:
training a neural network using a plurality of images (408, 410), each of the plurality of images (408, 410) corresponding to one or more vectors, each vector comprising: a coordinate representing a point associated with a bounding box (202, 222) in a corresponding image, and a dimension of the bounding box (202, 222), wherein each bounding box (202, 222) is suitable for media content overlay;
receiving by a media content insertion system a candidate image for a media content overlay;
inputting the candidate image into the neural network;
outputting, by the neural network, one or more bounding boxes as one or more data structures (300), each of which comprises at least a coordinate representing a point associated with the bounding box (202, 222), a dimension of the bounding box (202, 222), and a probability that the bounding box (202, 222) is located in an area suitable for the media content overlay;
for at least one of the one or more bounding boxes, determining whether the probability meets a threshold probability;
responsive to determining that the probability meets the threshold probability, determining that the bounding box (202, 222) is a candidate bounding box (852) of the candidate image;
receiving, from the neural network, the data structure (300) corresponding to the candidate bounding box (852) of the candidate image;
transmitting a request for a media content item to be displayed in the candidate bounding box, the request comprising the dimension of the candidate bounding box;
receiving the media content item in response to the request; and
causing a display of the candidate image and the media content item overlaid on top of the candidate image within the candidate bounding box.

8. The system of claim 7, wherein the instructions cause the one or more processor to perform operations comprising:
receiving the plurality of images (408, 410); and
receiving for each of the plurality of images (408, 410) one or more vectors.

9. The system of claim 7, wherein receiving the data structure (300) corresponding to the candidate bounding box (852) of the candidate image comprises receiving for each bounding box (202, 222):
a first coordinate representing a first offset along a horizontal axis of the candidate image and a second coordinate representing a second offset along a vertical axis of the candidate image,
a first dimension extending from the first coordinate along the horizontal axis, and
a second dimension extending from the second coordinate along the vertical axis.

10. The system of claim 7, wherein the instructions cause the one or more processor to perform operations comprising:
in response to the request, receiving a plurality of media content items corresponding to the one or more bounding boxes;
identifying from the plurality of media content items, a particular media content item corresponding to a bounding box (202, 222) with the highest probability; and selecting the particular media content item as the media content item.

11. The system of claim 7, wherein the instructions cause the one or more processor to perform operations comprising:
determining that the candidate image is a video frame associated with a video content item;
retrieving a set of video frames of the video content item, wherein the set of video frames comprises video frames that are played subsequently to the candidate image;
inputting each video frame of the set of video frames into the neural network;
receiving, from the neural network for each video frame in the set of video frames, corresponding coordinates and corresponding one or more dimensions representing one or more bounding boxes;
identifying in each video frame of the set of video frames a bounding box (202, 222) matching a bounding box (202, 222) in each other video frame within the set; and
including the bounding box (202, 222) matching the bounding box (202, 222) of each other video frame in the request.

12. The system of claim 11, wherein the instructions cause the one or more processor to perform operations comprising causing a display of the set of video frames and the media content item overlaid on top of each of the plurality of subsequent video frames within the bounding box.

13. A non-transitory computer readable medium storing instructions (1224), the instructions (1224) when executed by one or more processors cause the one or more processors to perform operations of the method of any of claims 1 to 6.

## Patentansprüche

1. Computerimplementiertes Verfahren zum Erkennen von Raum, der zum Überlagern von Medieninhalt auf ein Bild (100, 200) geeignet ist, wobei das Verfahren Folgendes umfasst:
Trainieren eines neuronalen Netzwerks unter Verwendung einer Mehrzahl von Bildern (408, 410), wobei jedes der Mehrzahl von Bildern (408, 410) einem oder mehreren Vektoren entspricht, wobei jeder Vektor Folgendes umfasst: eine Koordinate, die einen Punkt darstellt, der einem Begrenzungsrahmen (202, 222) in einem entsprechenden Bild zugeordnet ist, und eine Dimension des Begrenzungsrahmens (202, 222), wobei jeder Begrenzungsrahmen (202, 222) zum Überlagern von Medieninhalt geeignet ist;
Empfangen eines Kandidatenbildes für ein Überlagern von Medieninhalt durch ein Medieninhalt-Einfügungssystem (160, 1000);
Eingeben des Kandidatenbildes in das neuronale Netzwerk;
Ausgeben eines oder mehrerer Begrenzungsrahmen durch das neuronale Netzwerk als eine oder mehrere Datenstrukturen (300), von denen jede mindestens eine Koordinate, die einen Punkt darstellt, der dem Begrenzungsrahmen (202, 222) zugeordnet ist, eine Dimension des Begrenzungsrahmens (202, 222) und eine Wahrscheinlichkeit, dass sich der Begrenzungsrahmen (202, 222) in einem für das Überlagern von Medieninhalt geeigneten Bereich befindet, umfasst;
für mindestens einen des einen oder der mehreren Begrenzungsrahmen, Bestimmen, ob die Wahrscheinlichkeit eine Schwellenwahrscheinlichkeit erfüllt;
als Reaktion auf das Bestimmen, dass die Wahrscheinlichkeit die Schwellenwahrscheinlichkeit erfüllt, Bestimmen, dass der Begrenzungsrahmen (202, 222) ein Kandidatenbegrenzungsrahmen (852) des Kandidatenbildes ist;
Empfangen der Datenstruktur (300), die dem Kandidatenbegrenzungsrahmen (852) des Kandidatenbildes entspricht, von dem neuronalen Netzwerk;
Übertragen einer Anforderung für ein Medieninhaltselement, das in dem Kandidatenbegrenzungsrahmen (852) angezeigt werden soll, wobei die Anforderung die Dimension des Kandidatenbegrenzungsrahmens (852) umfasst;
Empfangen des Medieninhaltselements als Reaktion auf die Anforderung; und
Bewirken einer Anzeige des Kandidatenbildes und des Medieninhaltselements, das auf dem Kandidatenbild in dem Kandidatenbegrenzungsrahmen (852) überlagert ist.

2. Verfahren nach Anspruch 1, ferner umfassend:
Empfangen der Mehrzahl von Bildern (408, 410); und
Empfangen eines oder mehrerer Vektoren für jedes der Mehrzahl von Bildern (408, 410).

3. Verfahren nach Anspruch 1, wobei das Empfangen der Datenstruktur (300), die dem Kandidatenbegrenzungsrahmen (852) des Kandidatenbildes entspricht, das Empfangen für jeden Begrenzungsrahmen (202, 222) Folgendes umfasst:
einer ersten Koordinate, die einen ersten Versatz entlang einer horizontalen Achse des Kandidatenbildes darstellt, und einer zweiten Koordinate, die einen zweiten Versatz entlang einer vertikalen Achse des Kandidatenbildes darstellt,
einer ersten Dimension, die sich von der ersten Koordinate entlang der horizontalen Achse erstreckt, und
einer zweiten Dimension, die sich von der zweiten Koordinate entlang der vertikalen Achse erstreckt.

4. Verfahren nach Anspruch 1, ferner umfassend:
als Reaktion auf die Anforderung, Empfangen einer Mehrzahl von Medieninhaltselementen, die dem einen oder den mehreren Begrenzungsrahmen entsprechen;
Identifizieren eines bestimmten Medieninhaltselements aus der Mehrzahl von Medieninhaltselementen, das einem Begrenzungsrahmen (202, 222) mit der höchsten Wahrscheinlichkeit entspricht; und
Auswählen des bestimmten Medieninhaltselements als das Medieninhaltselement.

5. Verfahren nach Anspruch 1, ferner umfassend:
Bestimmen, dass das Kandidatenbild ein Videorahmen ist, der einem Videoinhaltselement zugeordnet ist;
Abrufen eines Satzes von Videorahmen des Videoinhaltselements, wobei der Satz von Videorahmen Videorahmen umfasst, die nach dem Kandidatenbild abgespielt werden;
Eingeben jedes Videorahmens des Satzes von Videorahmen in das neuronale Netzwerk;
Empfangen entsprechender Koordinaten und entsprechender einer oder mehrerer Dimensionen, die einen oder mehrere Begrenzungsrahmen darstellen, von dem neuronalen Netzwerk für jeden Videorahmen in dem Satz von Videorahmen;
Identifizieren eines Begrenzungsrahmens (202, 222) in jedem Videorahmen des Satzes von Videorahmen, der mit einem Begrenzungsrahmen (202, 222) in jedem anderen Videorahmen innerhalb des Satzes übereinstimmt; und
Aufnehmen des Begrenzungsrahmens (202, 222), der mit dem Begrenzungsrahmen (202, 222) jedes anderen Videorahmens übereinstimmt, in die Anforderung.

6. Verfahren nach Anspruch 5, ferner umfassend Bewirken einer Anzeige des Satzes von Videorahmen und des Medieninhaltselements, das auf jedem der Mehrzahl von nachfolgenden Videorahmen in dem Begrenzungsrahmen überlagert ist.

7. System (160, 1000) zum Erkennen von Raum, der zum Überlagern von Medieninhalt auf ein Bild (100, 200) geeignet ist, wobei das System (160, 1000) Folgendes umfasst:
Speicher mit darauf codierten Anweisungen (1224); und
einen oder mehrere Prozessoren, die beim Ausführen der Anweisungen (1224) dazu veranlasst werden, Operationen durchzuführen, die Folgendes umfassen:
Trainieren eines neuronalen Netzwerks unter Verwendung einer Mehrzahl von Bildern (408, 410), wobei jedes der Mehrzahl von Bildern (408, 410) einem oder mehreren Vektoren entspricht, wobei jeder Vektor Folgendes umfasst: eine Koordinate, die einen Punkt darstellt, der einem Begrenzungsrahmen (202, 222) in einem entsprechenden Bild zugeordnet ist, und eine Dimension des Begrenzungsrahmens (202, 222), wobei jeder Begrenzungsrahmen (202, 222) zum Überlagern von Medieninhalt geeignet ist;
Empfangen eines Kandidatenbildes für ein Überlagern von Medieninhalt durch ein Medieninhalt-Einfügungssystem;
Eingeben des Kandidatenbildes in das neuronale Netzwerk;
Ausgeben eines oder mehrerer Begrenzungsrahmen durch das neuronale Netzwerk als eine oder mehrere Datenstrukturen (300), von denen jede mindestens eine Koordinate, die einen Punkt darstellt, der dem Begrenzungsrahmen (202, 222) zugeordnet ist, eine Dimension des Begrenzungsrahmens (202, 222) und eine Wahrscheinlichkeit, dass sich der Begrenzungsrahmen (202, 222) in einem für das Überlagern von Medieninhalt geeigneten Bereich befindet, umfasst;
für mindestens einen des einen oder der mehreren Begrenzungsrahmen, Bestimmen, ob die Wahrscheinlichkeit eine Schwellenwahrscheinlichkeit erfüllt;
als Reaktion auf das Bestimmen, dass die Wahrscheinlichkeit die Schwellenwahrscheinlichkeit erfüllt, Bestimmen, dass der Begrenzungsrahmen (202, 222) ein Kandidatenbegrenzungsrahmen (852) des Kandidatenbildes ist;
Empfangen der Datenstruktur (300), die dem Kandidatenbegrenzungsrahmen des Kandidatenbildes entspricht, von dem neuronalen Netzwerk;
Übertragen einer Anforderung für ein Medieninhaltselement, das in dem Kandidatenbegrenzungsrahmen angezeigt werden soll, wobei die Anforderung die Dimension des Kandidatenbegrenzungsrahmens umfasst;
Empfangen des Medieninhaltselements als Reaktion auf die Anforderung; und
Bewirken einer Anzeige des Kandidatenbildes und des Medieninhaltselements, das auf dem Kandidatenbild in dem Kandidatenbegrenzungsrahmen überlagert ist.

8. System nach Anspruch 7, wobei die Anweisungen den einen oder die mehreren Prozessoren dazu veranlassen, Operationen durchzuführen, die Folgendes umfassen:
Empfangen der Mehrzahl von Bildern (408, 410); und
Empfangen eines oder mehrerer Vektoren für jedes der Mehrzahl von Bildern (408, 410).

9. System nach Anspruch 7, wobei das Empfangen der Datenstruktur (300), die dem Kandidatenbegrenzungsrahmen (852) des Kandidatenbildes entspricht, das Empfangen für jeden Begrenzungsrahmen (202, 222) Folgendes umfasst:
einer ersten Koordinate, die einen ersten Versatz entlang einer horizontalen Achse des Kandidatenbildes darstellt, und einer zweiten Koordinate, die einen zweiten Versatz entlang einer vertikalen Achse des Kandidatenbildes darstellt,
einer ersten Dimension, die sich von der ersten Koordinate entlang der horizontalen Achse erstreckt, und
einer zweiten Dimension, die sich von der zweiten Koordinate entlang der vertikalen Achse erstreckt.

10. System nach Anspruch 7, wobei die Anweisungen den einen oder die mehreren Prozessoren dazu veranlassen, Operationen durchzuführen, die Folgendes umfassen:
als Reaktion auf die Anforderung, Empfangen einer Mehrzahl von Medieninhaltselementen, die dem einen oder den mehreren Begrenzungsrahmen entsprechen;
Identifizieren eines bestimmten Medieninhaltselements aus der Mehrzahl von Medieninhaltselementen, das einem Begrenzungsrahmen (202, 222) mit der höchsten Wahrscheinlichkeit entspricht; und
Auswählen des bestimmten Medieninhaltselements als das Medieninhaltselement.

11. System nach Anspruch 7, wobei die Anweisungen den einen oder die mehreren Prozessoren dazu veranlassen, Operationen durchzuführen, die Folgendes umfassen:
Bestimmen, dass das Kandidatenbild ein Videorahmen ist, der einem Videoinhaltselement zugeordnet ist;
Abrufen eines Satzes von Videorahmen des Videoinhaltselements, wobei der Satz von Videorahmen Videorahmen umfasst, die nach dem Kandidatenbild abgespielt werden;
Eingeben jedes Videorahmens des Satzes von Videorahmen in das neuronale Netzwerk;
Empfangen entsprechender Koordinaten und entsprechender einer oder mehrerer Dimensionen, die einen oder mehrere Begrenzungsrahmen darstellen, von dem neuronalen Netzwerk für jeden Videorahmen in dem Satz von Videorahmen;
Identifizieren eines Begrenzungsrahmens (202, 222) in jedem Videorahmen des Satzes von Videorahmen, der mit einem Begrenzungsrahmen (202, 222) in jedem anderen Videorahmen innerhalb des Satzes übereinstimmt; und
Aufnehmen des Begrenzungsrahmens (202, 222), der mit dem Begrenzungsrahmen (202, 222) jedes anderen Videorahmens übereinstimmt, in die Anforderung.

12. System nach Anspruch 11, wobei die Anweisungen den einen oder die mehreren Prozessoren dazu veranlassen, Operationen durchzuführen, die Bewirken einer Anzeige des Satzes von Videorahmen und des Medieninhaltselements, das auf jedem der Mehrzahl von nachfolgenden Videorahmen in dem Begrenzungsrahmen überlagert ist, umfassen.

13. Nichtflüchtiges computerlesbares Medium, das Anweisungen (1224) speichert, wobei die Anweisungen (1224) bei Ausführung durch einen oder mehrere Prozessoren den einen oder die mehreren Prozessoren dazu veranlassen, Operationen des Verfahrens nach einem der Ansprüche 1 bis 6 durchzuführen.

## Revendications

1. Procédé mis en œuvre par ordinateur pour détecter un espace approprié pour superposer un contenu multimédia sur une image (100, 200), le procédé comprenant :
l'apprentissage d'un réseau neuronal en utilisant une pluralité d'images (408, 410), chacune de la pluralité d'images (408, 410) correspondant à un ou plusieurs vecteurs, chaque vecteur comprenant : une coordonnée représentant un point associé à une boîte englobante (202, 222) dans une image correspondante, et une dimension de la boîte englobante (202, 222), dans lequel chaque boîte englobante (202, 222) est appropriée pour une superposition de contenu multimédia ;
la réception par un système d'insertion de contenu multimédia (160, 1000) d'une image candidate pour une superposition de contenu multimédia ;
l'entrée de l'image candidate dans le réseau neuronal ;
la sortie, par le réseau neuronal, d'une ou plusieurs boîtes englobantes en tant qu'une ou plusieurs structures de données (300), dont chacune comprend au moins une coordonnée représentant un point associé à la boîte englobante (202, 222), une dimension de la boîte englobante (202, 222), et une probabilité que la boîte englobante (202, 222) soit située dans une zone appropriée pour la superposition de contenu multimédia ;
pour au moins l'une des une ou plusieurs boîtes englobantes, la détermination si la probabilité satisfait une probabilité de seuil ;
en réponse à la détermination que la probabilité satisfait la probabilité de seuil, la détermination que la boîte englobante (202, 222) est une boîte englobante candidate (852) de l'image candidate ;
la réception, à partir du réseau neuronal, de la structure de données (300) correspondant à la boîte englobante candidate (852) de l'image candidate ;
la transmission d'une demande pour un élément de contenu multimédia à afficher dans la boîte englobante candidate (852), la demande comprenant la dimension de la boîte englobante candidate (852) ;
la réception de l'élément de contenu multimédia en réponse à la demande ; et
la provocation d'un affichage de l'image candidate et de l'élément de contenu multimédia superposé sur l'image candidate à l'intérieur de la boîte englobante candidate (852).

2. Procédé selon la revendication 1, comprenant en outre :
la réception de la pluralité d'images (408, 410) ; et
la réception pour chacune de la pluralité d'images (408, 410) d'un ou plusieurs vecteurs.

3. Procédé selon la revendication 1, dans lequel la réception de la structure de données (300) correspondant à la boîte englobante candidate (852) de l'image candidate comprend la réception pour chaque boîte englobante (202, 222) :
d'une première coordonnée représentant un premier décalage le long d'un axe horizontal de l'image candidate et d'une seconde coordonnée représentant un second décalage le long d'un axe vertical de l'image candidate,
d'une première dimension s'étendant à partir de la première coordonnée le long de l'axe horizontal, et
d'une seconde dimension s'étendant à partir de la seconde coordonnée le long de l'axe vertical.

4. Procédé selon la revendication 1, comprenant en outre :
en réponse à la demande, la réception d'une pluralité d'éléments de contenu multimédia correspondant aux une ou plusieurs boîtes englobantes ;
l'identification à partir de la pluralité d'éléments de contenu multimédia, d'un élément de contenu multimédia particulier correspondant à une boîte englobante (202, 222) avec la probabilité la plus élevée ; et
la sélection de l'élément de contenu multimédia particulier en tant qu'élément de contenu multimédia.

5. Procédé selon la revendication 1, comprenant en outre :
la détermination que l'image candidate est une trame vidéo associée à un élément de contenu vidéo ;
la récupération d'un ensemble de trames vidéo de l'élément de contenu vidéo, dans lequel l'ensemble de trames vidéo comprend des trames vidéo qui sont lues ultérieurement à l'image candidate ;
l'entrée de chaque trame vidéo de l'ensemble de trames vidéo dans le réseau neuronal ;
la réception, à partir du réseau neuronal pour chaque trame vidéo dans l'ensemble de trames vidéo, de coordonnées correspondantes et d'une ou plusieurs dimensions correspondantes représentant une ou plusieurs boîtes englobantes ;
l'identification dans chaque trame vidéo de l'ensemble de trames vidéo d'une boîte englobante (202, 222) correspondant à une boîte englobante (202, 222) dans chaque autre trame vidéo dans l'ensemble ; et
l'inclusion de la boîte englobante (202, 222) correspondant à la boîte englobante (202, 222) de chaque autre trame vidéo dans la demande.

6. Procédé selon la revendication 5, comprenant en outre la provocation d'un affichage de l'ensemble de trames vidéo et de l'élément de contenu multimédia superposé sur chacune de la pluralité de trames vidéo ultérieures à l'intérieur de la boîte englobante.

7. Système (160, 1000) pour détecter un espace approprié pour superposer un contenu multimédia sur une image (100, 200), le système (160, 1000) comprenant :
une mémoire avec des instructions (1224) codées sur celle-ci ; et
un ou plusieurs processeurs qui, lors de l'exécution des instructions (1224), sont amenés à effectuer des opérations comprenant :
l'apprentissage d'un réseau neuronal en utilisant une pluralité d'images (408, 410), chacune de la pluralité d'images (408, 410) correspondant à un ou plusieurs vecteurs, chaque vecteur comprenant : une coordonnée représentant un point associé à une boîte englobante (202, 222) dans une image correspondante, et une dimension de la boîte englobante (202, 222), dans lequel chaque boîte englobante (202, 222) est appropriée pour une superposition de contenu multimédia ;
la réception par un système d'insertion de contenu multimédia d'une image candidate pour une superposition de contenu multimédia ;
l'entrée de l'image candidate dans le réseau neuronal ;
la sortie, par le réseau neuronal, d'une ou plusieurs boîtes englobantes en tant qu'une ou plusieurs structures de données (300), dont chacune comprend au moins une coordonnée représentant un point associé à la boîte englobante (202, 222), une dimension de la boîte englobante (202, 222), et une probabilité que la boîte englobante (202, 222) soit située dans une zone appropriée pour la superposition de contenu multimédia ;
pour au moins l'une des une ou plusieurs boîtes englobantes, la détermination si la probabilité satisfait une probabilité de seuil ;
en réponse à la détermination que la probabilité satisfait la probabilité de seuil, la détermination que la boîte englobante (202, 222) est une boîte englobante candidate (852) de l'image candidate ;
la réception, à partir du réseau neuronal, de la structure de données (300) correspondant à la boîte englobante candidate (852) de l'image candidate ;
la transmission d'une demande pour un élément de contenu multimédia à afficher dans la boîte englobante candidate, la demande comprenant la dimension de la boîte englobante candidate ;
la réception de l'élément de contenu multimédia en réponse à la demande ; et
la provocation d'un affichage de l'image candidate et de l'élément de contenu multimédia superposé sur l'image candidate à l'intérieur de la boîte englobante candidate.

8. Système selon la revendication 7, dans lequel les instructions amènent les un ou plusieurs processeurs à effectuer des opérations comprenant :
la réception de la pluralité d'images (408, 410) ; et
la réception pour chacune de la pluralité d'images (408, 410) d'un ou plusieurs vecteurs.

9. Système selon la revendication 7, dans lequel la réception de la structure de données (300) correspondant à la boîte englobante candidate (852) de l'image candidate comprend la réception pour chaque boîte englobante (202, 222) :
d'une première coordonnée représentant un premier décalage le long d'un axe horizontal de l'image candidate et d'une seconde coordonnée représentant un second décalage le long d'un axe vertical de l'image candidate,
d'une première dimension s'étendant à partir de la première coordonnée le long de l'axe horizontal, et
d'une seconde dimension s'étendant à partir de la seconde coordonnée le long de l'axe vertical.

10. Système selon la revendication 7, dans lequel les instructions amènent les un ou plusieurs processeurs à effectuer des opérations comprenant :
en réponse à la demande, la réception d'une pluralité d'éléments de contenu multimédia correspondant aux une ou plusieurs boîtes englobantes ;
l'identification à partir de la pluralité d'éléments de contenu multimédia, d'un élément de contenu multimédia particulier correspondant à une boîte englobante (202, 222) avec la probabilité la plus élevée ; et
la sélection de l'élément de contenu multimédia particulier en tant qu'élément de contenu multimédia.

11. Système selon la revendication 7, dans lequel les instructions amènent les un ou plusieurs processeurs à effectuer des opérations comprenant :
la détermination que l'image candidate est une trame vidéo associée à un élément de contenu vidéo ;
la récupération d'un ensemble de trames vidéo de l'élément de contenu vidéo, dans lequel l'ensemble de trames vidéo comprend des trames vidéo qui sont lues ultérieurement à l'image candidate ;
l'entrée de chaque trame vidéo de l'ensemble de trames vidéo dans le réseau neuronal ;
la réception, à partir du réseau neuronal pour chaque trame vidéo dans l'ensemble de trames vidéo, de coordonnées correspondantes et d'une ou plusieurs dimensions correspondantes représentant une ou plusieurs boîtes englobantes ;
l'identification dans chaque trame vidéo de l'ensemble de trames vidéo d'une boîte englobante (202, 222) correspondant à une boîte englobante (202, 222) dans chaque autre trame vidéo dans l'ensemble ; et
l'inclusion de la boîte englobante (202, 222) correspondant à la boîte englobante (202, 222) de chaque autre trame vidéo dans la demande.

12. Système selon la revendication 11, dans lequel les instructions amènent les un ou plusieurs processeurs à effectuer des opérations comprenant la provocation d'un affichage de l'ensemble de trames vidéo et de l'élément de contenu multimédia superposé sur chacune de la pluralité de trames vidéo ultérieures à l'intérieur de la boîte englobante.

13. Support lisible par ordinateur non transitoire stockant des instructions (1224), les instructions (1224), lorsqu'elles sont exécutées par un ou plusieurs processeurs, amènent les un ou plusieurs processeurs à effectuer des opérations du procédé selon l'une quelconque des revendications 1 à 6.
